# EUROPEAN PATENT APPLICATION

(11) **EP 4 112 419 A1**
(43) Date of publication of application: **04.01.2023**
(21) Application number: 22169132.2
(22) Date of filing: 21.04.2022
(51) Int. Cl.: B61L 15/00, B61L 27/40, B61L 27/53, B61L 27/57, B61L 27/60, B61L 27/70, G06F 21/57, H04L 9/40

(54) **SYSTEMS FOR CYBERSECURITY OF A RAIL TRANSPORTATION NETWORK**

(30) Priority: 30.06.2021 US 202163216596 P; 08.02.2022 US 202217650326
(71) Applicant: Cervello Ltd., 6789124 Tel Aviv (IL)
(72) Inventor: Kafzan, Shaked, 6274111 Tel-Aviv (IL); Aharon, Eitam, 3434305 Haifa (IL)
(74) Representative: Hepp Wenger Ryffel AG

(57) **Abstract**

Disclosed are systems and a method for cybersecurity of a transportation management network, based on operational commands. A simulation engine generates expected behavior policies for transportation management network units - based on data, from one or more resources, indicative of the transportation network's activity. Generated policies are relayed to respective agents associated with the policy-generated/profiled unit. Expected behavior policies of the transportation management network units are based on Railway Signaling to and from systems used to control railway traffic safety and trains collision prevention.

## Description

### FIELD OF THE INVENTION

The present invention generally relates to the fields of cybersecurity of operational technology system networks, such as railway fleets' operational network security. More specifically, the present invention relates to methods, systems, devices, circuits and functionally related machine executable instructions for operational commands based cybersecurity of a transportation management network.

### BACKGROUND

Railway signaling systems are used to direct railway traffic and keep trains always clear of each other. Railway infrastructures are moving towards more intelligent, connected, and collaborative systems.

As railways increase efficiencies through automation and digitization - by moving from strictly mechanical systems and standalone systems to digital, open-platform and standardized equipment - they become more vulnerable to cyberattacks through a nearly unlimited number of attack vectors.

As a result, the Operational Technology (OT) environment is no longer considered to be a closed network, meaning, from now on any component in the OT network can be hacked and manipulated in a way which could cause serious damage to the railway operation.

Modern rail systems have highly specific control & safety technology infrastructures implemented with signaling technology. The signaling technology includes electronic interlocking, radio/cellular-based signaling systems such as the European Train Control System (ETCS) and the Positive Train Control system (PTC), and designated mobile-radio standards to which hackers cannot simply gain access.

Nonetheless, these complex technologies are only able to operate because of their integration into the Internet-based, or other network based, data communication system and the fact they all run via corresponding servers just like any other application. In such vulnerable environments - the risk of cyberattacks, interventions, and intrusions from different unauthorized parties, has become increasingly high.

There remains a need, in the fields of cybersecurity and of Information Technology (IT) and Operational Technology (OT) network security, for cybersecurity solutions that secure the operation of, and the communication between, the different endpoints of a transportation network in a way which provides protection to the railway network.

The teachings herein may for example be applicable to any railway industry standard for a signaling system such as, but not limited to, the European Rail Traffic Management System (ERTMS) that is the system of standards for management and interoperation of signaling for railways by the European Union (EU). It is conducted by the European Union Agency for Railways (ERA) and is the organizational umbrella for the separately managed parts of GSM-R (communication), European Train Control System (ETCS, signaling).

### SUMMARY OF THE INVENTION

Embodiments of the present invention may include methods, circuits, devices, assemblies, systems and functionally associated machine executable code for securing rail transportation networks from malicious electronic interference, such as a cyberattack. According to further embodiments, there may be provided methods and systems for real-time safety monitoring of rolling stock on transportation networks. According to yet further embodiments of the present invention, there may be provided methods and systems for enforcing a given rolling stock's (e.g. train's, trolley's, locomotive's, etc.) adherence to operational rules or parameters associated with the given rolling stock, within a context of the rolling stock's real-time configuration (e.g. payload type and size), location, speed and or state. The operational rules and or parameters may optionally be those rules or parameters provided as part of a 'start of mission' message to a rolling stock's controller. The operational rules and or parameters may be provided to the rolling stock's controller as an update after start of mission.

A rail transportation system according to embodiments of the present invention may include, or may otherwise be functionally associated with, a transportation network segment simulation engine ('SimE'), or a module thereof - for example, implemented on a system server such as a behavior monitoring server - to digitally model and simulate operation of one or more segments of the transportation system, such that the SimE may predict a future state of a given transportation network segment, including the rolling stock thereon, at least partially based on: (1) the operational rules and or parameters, and (2) a 'starting state' of the given network segment that is at least partially based on (a) a model of the given network segment, and or (b) a set of inputs indicating timing and operational parameters of rolling stock on and or approaching the given transportation network segment.

The SimE may receive the set of inputs and or following real-time input data, directly or through a system monitoring node, from monitoring agents which are integral, or otherwise functionally association with, each of one or more transportation network management units, wherein each transportation management unit may monitor and or regulate a condition, state or operation of a transportation system element, segment, path, functional block, sub-system or rolling stock. The SimE may also receive the operational rules and or parameters, as copies of 'Start of Mission' or 'Mission Update' messages from a rail transportation system control node issued to rolling stock controller type management units. Accordingly, the SimE may predict future real-time input data indicative of locations and states, at various points in the future, of some or all rolling stock passing through its coverage area or segment, for example, based on instantaneous transportation system operational parameters and states of all relevant elements within the network segment being covered. The SimE may recalculate predictions of future locations and states of some or all rolling stock passing through the relevant transportation system segment each time the SimE receives a new 'Start of Mission' or 'Mission Update' message copy, and or each time a new set of real-time input data is received.

A SimE according to embodiments of the present invention may run one or multiple accelerated simulations of varying speeds, resolution and durations, in order to predict future transportation system segment states, each time new real-time input data regarding any element within or approaching the segment under coverage is received. Simulations, in accordance with embodiments of the present invention, may result in one or more predicted undesirable system states within the network segment being covered, for example a predicted state where two or more rolling stocks are to be at the same location at the same time, either traveling in the same or opposite directions, at some given point in the future. Additional undesirable system states may include: (a) rolling stock not communicating with a specific network management unit at a predicted time; (b) rolling stock communicating with a specific network management unit at an unpredicted time; (c) rolling stock receiving instructions which cause it to take a turn overloaded and or at an excessive speed; (d) rolling stock approaching a station faster than would allow for a stop at the station; and (e) taking a route unsuitable for the type of payload designated by the 'Start of Mission' or 'Mission Update' states. Many more such undesirable conditions exist and may be predicted for by a SimE according to embodiments.

An alert notification module, integral or otherwise functionally associated with the SimE, may generate and transmit an alert notification if the SimE predicts any undesirable future condition or state of any elements of the segments under coverage by the SimE. The alert notifications may be sent back to the control node which generated the signal which caused the SimE to predict an undesirable future state within the segment under coverage. The alert notification module may, responsive to the detection, message multiple transportation system stake holders including the rolling stock at risk.

According to further embodiments, the alert notification module may be functionally associated with a risk mitigation module which may either block messages identified as resulting in undesirable results or may generate emergency countermeasures to the message predicted to lead to a predicted collision.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings:
In figure 1, there is shown a schematic architecture of an exemplary railway signaling system communication network, the signaling system including a Security Operations Center (SOC), a Command and control block, a Safety and element control block a Rolling Stock - referring to railway vehicles, and, a Monitoring agent and a Transportation network segment simulation engine for securing a segment of the rail transportation network, in accordance with some embodiments;
In figure 2A, there is shown a block diagram of an exemplary system for cybersecurity of a transportation management network, based on operational commands, in accordance with some embodiments;
In figure 2B, there is shown a block diagram of an exemplary system for cybersecurity of a transportation management network, based on operational commands, wherein the system further includes a transportation management network monitoring node, a transportation management network control node, an alert notification module, and a risk mitigation module, in accordance with some embodiments;
In figure 3A, there is shown a flowchart of the main steps executed as part of an exemplary method for validating, based on information that was set up in an ETCS or a Start of Mission (SoM), that no abnormal behavior is occurring as part of the railway infrastructure devices' operation, in accordance with some embodiments;
In figure 3B, there is shown an exemplary Train Position Report Command, compared/correlated to an SoM command of the train's journey or mission, in accordance with some embodiments;
In figure 4A, there is shown a flowchart of an exemplary process for securing a rail transportation network segment based on a 'starting state' of the segment and an operational commands or parameters cybersecurity policy, in accordance with some embodiments;
In figure 4B, there is shown a flowchart of an exemplary process for generating a 'starting state' of a monitored transportation network segment, in accordance with some embodiments;
In figure 5, there is shown a flowchart of an exemplary process for assessing transportation network elements'/units' real-time metadata/communications, based on priorly received application data/layer commands such as an SoM command, in accordance with some embodiments; and
In figure 6, there is shown a flowchart of an exemplary process for assessing transportation network elements'/units' real-time metadata/communications, based on a specific priorly received application data/layer command such as an SoM command, in accordance with some embodiments.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals or element labeling may be repeated among the figures to indicate corresponding or analogous elements.

### DETAILED DESCRIPTION

In the following detailed description, numerous specific details are set forth in order to provide a thorough understanding of some embodiments. However, it will be understood by persons of ordinary skill in the art that some embodiments may be practiced without these specific details. In other instances, well-known methods, procedures, components, units and/or circuits have not been described in detail so as not to obscure the discussion.

Unless specifically stated otherwise, as apparent from the following discussions, it is appreciated that throughout the specification discussions utilizing terms such as "processing", "computing", "calculating", "determining", or the like, may refer to the action and/or processes of a computer, computing system, computerized mobile device, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

In addition, throughout the specification discussions utilizing terms such as "storing", "hosting", "caching", "saving", or the like, may refer to the action and/or processes of 'writing' and 'keeping' digital information on a computer or computing system, or similar electronic computing device, and may be interchangeably used. The term "plurality" may be used throughout the specification to describe two or more components, devices, elements, parameters and the like.

Some embodiments of the invention, may for example take the form of an entirely hardware embodiment, an entirely software embodiment, or an embodiment including both hardware and software elements. Some embodiments may be implemented in software, which includes but is not limited to, any combination of: firmware, resident software, microcode, or the like. Some embodiments may be implemented in hardware, which includes but is not limited to, any combination of: a processor, memory and data storage components, a power source, communication circuitry, I/O interfaces, cards and devices, programmable arrays, systems on chip, or the like. Some embodiments may be implemented using a combination of hardware and software, which includes but is not limited to, any combination of the above hardware and software types and components.

Furthermore, some embodiments of the invention may take the form of a computer program product accessible from a computer-usable or computer-readable medium providing program code for use by or in connection with a computer or any instruction execution system. For example, a computer-usable or computer-readable medium may be or may include any apparatus that can contain, store, communicate, propagate, or transport the program for use by or in connection with the instruction execution system, apparatus, or device, for example a computerized device running a web-browser.

In some embodiments, the medium may be an electronic, magnetic, optical, electromagnetic, infrared, or semiconductor system (or apparatus or device) or a propagation medium. Some demonstrative examples of a computer-readable medium may include a semiconductor or solid state memory, magnetic tape, a removable computer diskette, a random access memory (RAM), a read-only memory (ROM), a rigid magnetic disk, and an optical disk. Some demonstrative examples of optical disks include compact disk - read only memory (CD-ROM), compact disk - read/write (CD-R/W), and DVD.

In some embodiments, a data processing system suitable for storing and/or executing program code may include at least one processor coupled directly or indirectly to memory elements, for example, through a system bus. The memory elements may include, for example, local memory employed during actual execution of the program code, bulk storage, and cache memories which may provide temporary storage of at least some program code in order to reduce the number of times code must be retrieved from bulk storage during execution. The memory elements may, for example, at least partially include memory/registration elements on the user device itself.

In some embodiments, input/output or I/O devices (including but not limited to keyboards, displays, pointing devices, etc.) may be coupled to the system either directly or through intervening I/O controllers. In some embodiments, network adapters may be coupled to the system to enable the data processing system to become coupled to other data processing systems or remote printers or storage devices, for example, through intervening private or public networks. In some embodiments, modems, cable modems and Ethernet cards are demonstrative examples of types of network adapters. Other suitable components may be used.

Functions, operations, components and/or features described herein with reference to one or more embodiments, may be combined with, or may be utilized in combination with, one or more other functions, operations, components and/or features described herein with reference to one or more other embodiments.

The terminology used herein is for the purpose of describing particular embodiments only and is not intended to be limiting of the invention. As used herein, the term "and/or" includes any and all combinations of one or more of the associated listed items. As used herein, the singular forms "a," "an," and "the" are intended to include the plural forms as well as the singular forms, unless the context clearly indicates otherwise. It will be further understood that the terms "includes", "including", "comprises" and/or "comprising," when used in this specification, specify the presence of stated features, steps, operations, elements, and/or components, but do not preclude the presence or addition of one or more other features, steps, operations, elements, components, and/or groups thereof.

Unless otherwise defined, all terms (including technical and scientific terms) used herein have the same meaning as commonly understood by one having ordinary skill in the art to which this invention belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, the specification and claims should be read with the understanding that such combinations are entirely within the scope of the invention and the claims.

The present disclosure is to be considered as an exemplification of the invention and is not intended to limit the invention to the specific embodiments illustrated by the figures or description below.

Lastly, the solutions, techniques and examples, in the following detailed description, are generally described in the context of providing cybersecurity to a transportation management system and more specifically to railway management and signaling systems. This however, is not to limit the teachings herein, all or some of which may be likewise applicable to the digital and cybersecurity and protection of various transportation related, and/or non-transportation related, control/management networks and systems.

Embodiments of the present invention may include methods, circuits, devices, assemblies, systems and functionally associated machine executable code for securing rail transportation networks from malicious electronic interference, such as a cyberattack. According to further embodiments, there may be provided methods and systems for real-time safety monitoring of rolling stock on transportation networks. According to yet further embodiments of the present invention, there may be provided methods and systems for enforcing a given rolling stock's (e.g. train's, trolley's, locomotive's, etc.) adherence to operational rules or parameters associated with the given rolling stock, within a context of the rolling stock's real-time configuration (e.g. payload type and size), location, speed and or state. The operational rules and or parameters may optionally be those rules or parameters provided as part of a 'start of mission' message to a rolling stock's controller. The operational rules and or parameters may be provided to the rolling stock's controller as an update after start of mission.

Operational rules, commands and or parameters, in accordance with embodiments, may refer or relate to any rule, command and or parameter of/within a railway protocol/standard such as, but not limited to: ERTMS, ETCS, PTC, CBTC and/or other. Some or all of the rolling stock related embodiments described herein, may be likewise applicable to other railway network signaling system elements, including various rolling stocks, wayside units, railway infrastructure element controls, command and control components such as security operation center (SOC) components, and/or any other transportation network signaling system elements.

A rail transportation system according to embodiments of the present invention may include, or may otherwise be functionally associated with, a transportation network segment simulation engine ('SimE'), or a module thereof - for example, implemented on a system server such as a behavior monitoring server - to digitally model and simulate operation of one or more segments of the transportation system, such that the SimE may predict a future state of a given transportation network segment, including the rolling stock thereon, at least partially based on: (1) the operational rules and or parameters, and (2) a 'starting state' of the given network segment that is at least partially based on (a) a model of the given network segment, and or (b) a set of inputs indicating timing and operational parameters of rolling stock on and or approaching the given transportation network segment.

The SimE may receive the set of inputs and or following real-time input data, directly or through a system monitoring node, from monitoring agents which are integral, or otherwise functionally association with, each of one or more transportation network management units, wherein each transportation management unit may monitor and or regulate a condition, state or operation of a transportation system element, segment, path, functional block, sub-system or rolling stock. The SimE may also receive the operational rules and or parameters, as copies of 'Start or Mission' or 'Mission Update' messages from a rail transportation system control node issued to rolling stock controller type management units. Accordingly, the SimE may predict future real-time input data indicative of locations and states, at various points in the future, of some or all rolling stock passing through its coverage area or segment, for example, based on instantaneous transportation system operational parameters and states of all relevant elements within the network segment being covered. The SimE may recalculate predictions of future locations and states of some or all rolling stock passing through the relevant transportation system segment each time the SimE receives a new 'Start of Mission' or 'Mission Update' message copy, and or each time a new set of real-time input data is received.

A SimE according to embodiments of the present invention may run one or multiple accelerated simulations of varying speeds, resolution and durations, in order to predict future transportation system segment states, each time new real-time input data regarding any element within or approaching the segment under coverage is received. Simulations, in accordance with embodiments of the present invention, may result in one or more predicted undesirable system states within the network segment being covered, for example a predicted state where two or more rolling stocks are to be at the same location at the same time, either traveling in the same or opposite directions, at some given point in the future. Additional undesirable system states may include: (a) rolling stock not communicating with a specific network management unit at a predicted time; (b) rolling stock communicating with a specific network management unit at an unpredicted time; (c) rolling stock receiving instructions which cause it to take a turn overloaded and or at an excessive speed; (d) rolling stock approaching a station faster than would allow for a stop at the station; and (e) taking a route unsuitable for the type of payload designated by the 'Start of Mission' or 'Mission Update' states. Many more such undesirable conditions exist and may be predicted for by a SimE according to embodiments.

An alert notification module, integral or otherwise functionally associated with the SimE, may generate and transmit an alert notification if the SimE predicts any undesirable future condition or state of any elements of the segments under coverage by the SimE. The alert notifications may be sent back to the control node which generated the signal which caused the SimE to predict an undesirable future state within the segment under coverage. The alert notification module may, responsive to the detection, message multiple transportation system stake holders including the rolling stock at risk.

According to further embodiments, the alert notification module may be functionally associated with a risk mitigation module which may either block messages identified as resulting in undesirable results or may generate emergency countermeasures to the message predicted to lead to a predicted collision.

According to embodiments of the present invention, a set of one or more of the monitoring agents may be coupled to respective transportation management network units and adapted to each collect and relay signals/data-streams indicative of the units' recent communications and activity and/or recent/current operation state(s)/status(es). The SimE may receive and store the signals/data-streams - from some or all of the agents in the set of transportation management network agents - indicating their respective units' activity and/or status(es).

The SimE module, or a module thereof - for example, implemented on a system computer/server such as a unit policy generation module/server - may generate expected behavior cyber security policy(ies)/profile(s) for at least some of the transportation management network units. The policy(ies)/profile(s) may be based on the signals/datastreams received by the SimE and/or based on data, from one or more resources, indicative of the transportation network's activity. A generated policy/profile may be relayed-to/shared-with its respective agent and optionally with one or more other agents of the transportation management network, associated with the policy-generated/profiled unit.

According to some embodiments, an adherence verification engine, and or cyber-event detection logics each associated with a system unit monitoring agent, may compare one or more of the relayed unit policies to actual/current/real-time behavior of the same network units, and may associate a potential malicious activity, malware, or cyber event - with one or more anomalies or mismatches detected between, a network unit behavioral policy and the actual/current/real-time behavior of the same profiled network unit.

According to some embodiments, transportation management network units monitored by system agents, may include, but are not limited to, any combination of: a control center, interlocking (IXL) units, radio block control units, rolling stock vehicles (e.g. car, locomotive) onboard units, and or network wayside units.

According to some embodiments, system 'agents', as described herein, may take the form of, or be implemented as: a software agent/application, a dedicated function embedded system, a system on chip (SoC), a multi-function computer or server and/or any software and/or hardware including a combination of the above listed computing system/component/module/engine types, or any computing system/component type to be devised in the future. According to some embodiments, the cybersecurity agents described in any of the embodiments herein, may use deep-packet inspection for network packets to detect malicious activity or exploits - such as protocol vulnerabilities, operating system vulnerabilities and more.

According to embodiments of the present invention, the unit policy generation module/server may generate expected behavior cyber-policy(ies)/profile(s) for at least some of the transportation management network units - based on Railway Signaling and/or Operational Rules or Parameters, wherein Railway Signaling and/or Operational Rules or Parameters may include all signals to and from systems used to control railway traffic safely and trains collision prevention.

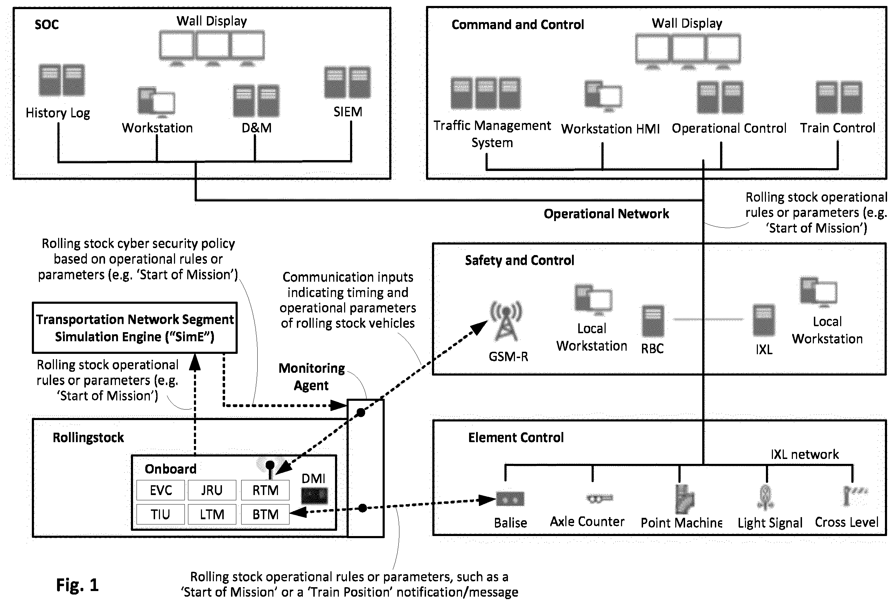

Reference is now made to figure 1 where there is shown a schematic architecture of an exemplary railway operational (signaling system) and communication network, in accordance with some embodiments, the signaling system including the following main areas/blocks: (1) a Security Operations Center (SOC) - managing security issues in the transportation network and enhancing overall security; (2) a Command and Control - control and management systems for the rolling stock (trains) and the rail track operational infrastructure; (3) a Safety Control and (4) an Element Control - the infrastructure for controlling train routes and the safety restrictions; and (5) Rolling Stock - referring to railway vehicles.

Further shown in the figure, are the following exemplary components/modules of the signaling system blocks and their interrelations. The SOC, including: a wall display; a history log; a workstation; an SIEM - Security information and event management; and a D&M - Diagnostic and maintenance. The Command and Control, including: a wall display; a traffic management system; a workstation Human-Machine Interface (HMI); an operational control; and a train control. The Safety and Control, including: local workstations of the specific Safety and Control block/station, out of multiple Safety and Control blocks/stations of the railway network; an RBC - Radio block control, interconnected with an interlocking (IXL) managing mutual-dependency of the railway network operational components; and a Global System for Mobile Communications - Railway (GSM-R) for communicating, for example based on RBC commands, with rollingstock and other transportation network units. The Element and Control, showing the IXL network including: a balise, an axle counter, a point machine, a light signal, and a cross level. Lastly, the Rollingstock is shown to have an onboard unit, including: a Radio Transmitter Module (RTM); a European Vital Computer (EVC); a Driver Man Interface (DMI); a Balise Transmitter Module (BTM); a EuroLoop Transmitter Module (LTM); a Train Interface Module/Unit (TIU); and a Juridical Recording Unit (JRU).

In the figure, the rollingstock's received operational rules and parameters are shown to be communicated by the onboard unit to the system's SimE. The operational rules and parameters are used by the SimE to generate a cybersecurity policy - including predictions of future operational communications, commands and states associated with the rollingstock's mission/journey. The generated cybersecurity policy is then relayed to the shown monitoring agent functionally associated/paired with the rollingstock, for enforcement. The real-time timing and operational communications between: (1) the GSM-R and the rollingstock's RTM; and/or (2) The balise element and the rollingstock's BTM; are shown to be monitored by the monitoring agent of the cybersecurity system. The agent then compares the real-time communications to the predictions within the generated cybersecurity policy, to trigger an alert upon a mismatch therebetween. Alternatively, the agent may relay its monitored real-time communications to the SimE for comparison, by the SimE or a module thereof, to the predictions within the generated cybersecurity policy.

According to some embodiments, a unit policy generation module/server of the SimE may build cybersecurity policies for transportation management network units including critical elements of the signaling system network (e.g. RBC, IXL, OBU (Onboard Unit), WSU (Wayside Unit).

The unit policy generation module/server may receive as inputs a Train Control System's (e.g. ETCS's) operational rules. One or more future estimated commands/communications between the elements in the signaling system network and/or the rollingstock vehicle(s) may be derived based on the received operational rules, combined to form a cybersecurity policy and provided as output.

The cybersecurity policies may contain the future commands/communications of specific elements in the signaling system network and may correlate them with actual real time traffic data. For example, the command defining the route of the train/rollingstock before the ride initiates (Start of Mission - SoM) is utilized to build cybersecurity policies for every element in the signaling system involved in that tarin's/rollingstock's mission/journey.

The cybersecurity policies may further contain communication information, including future estimated metadata and inter-element operation data, for correlation with real time traffic during the mission/jouney. A given policy of future estimated metadata and inter-element operation data, in accordance with some embodiments, may be associated with a specific context of a state or a status of the transportation network management system and its units. Accordingly, a specific policy, including future estimated metadata and inter-element/unit operation data, may be selected for correlation/comparison with real time traffic based on the current/real-time, or an expected, context of a state or a status of the transportation network management system and its units.

According to some embodiments, the policy may be at least partially based on a Start of Mission (SoM) command of a given train journey, and utilized for comparison - of the SoM based policy - to Train Position Report Commands (e.g. including current speed and location of the given train) received during the given train's/rollingstock's mission/journey. A received Train Position Report Command including data that does not correlate-to/match (e.g. the position or speed of the train) the corresponding generated SoM based policy may be regarded/labeled as a manipulated/cyber-attack command.

The following is a specific system implementation example, in accordance with some embodiments, wherein policy records/rules are derived based on ETCS's rules. As part of train preparation, the following train data is entered, modified and/or validated by a driver/train-preparer; pre-configured or automatically configured on-board; and/or received from networked ETCS external sources.

The exemplary train data includes the following data fields:
- ETCS operational train category.
- train length.
- brake percentage.
- maximum train speed.
- axle load category.
- train fitted with the airtight system.
- loading gauge.
- additional data for the available STMs.

Based on the above input field providing the length of the train for a given train ride/journey, a cybersecurity policy record is generated, indicating that the train blocks a specific rail-block and cannot release part of the specific rail-block.

Another example, is based on the above input of the maximum train speed during the ride/journey, a cybersecurity policy record is generated, based on an assumption that the communication between the rollingstock onboard unit and the Balise will not allow a speed over that limit.

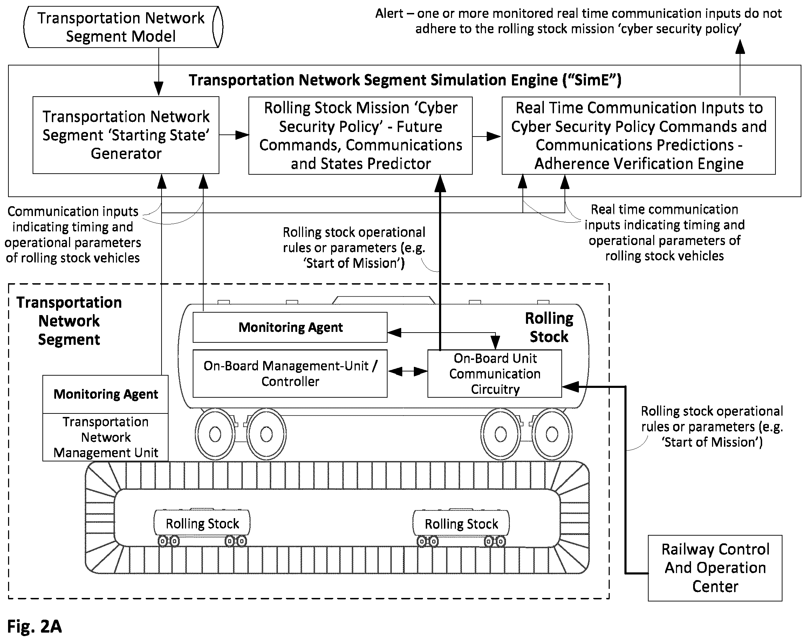

Reference is now made to figure 2A, where there is shown a block diagram of an exemplary system for cybersecurity of a transportation management network, based on operational commands, in accordance with some embodiments. In the figure, there is shown a transportation network segment including rollingstock vehicles and cybersecurity agents monitoring communications and commands relayed to and from the shown rollingstock and a transportation management network unit (e.g. a WSU, a balise). Further shown is the cybersecurity system's SimE.

A digital model of the transportation network segment, along with an initial set of communication inputs, collected and relayed by the shown monitoring agents and indicating timing and operational parameters and states of rolling stock vehicles and transportation network management units in the segment - are collectively utilized by the SimE to generate a 'Starting State' of the transportation network segment.

Rollingstock operational rules and parameters, such as an SoM or a mission update, are issued and communicated by the shown railway control and operation center to the associated rollingstock's onboard management-unit/controller, and forwarded by the onboard unit to the SimE. The rollingstock mission 'cyber security policy' generator builds, based on the generated 'starting state' of the network segment and the communicated operational rules and parameters, a rollingstock policy including future commands, communications and states predictions associated with the rollingstock's mission/journey.

Real time communication inputs indicating timing and operational parameters of rolling stock vehicles, collected during the rollingstock's mission/journey by the monitoring agents are relayed to the SimE's adherence verification engine for comparison to the command and communication predictions within the generated rollingstock mission/journey cybersecurity policy. Upon one or more monitored real time communication inputs not adhering to the rolling stock mission cyber security policy, an alert is triggered.

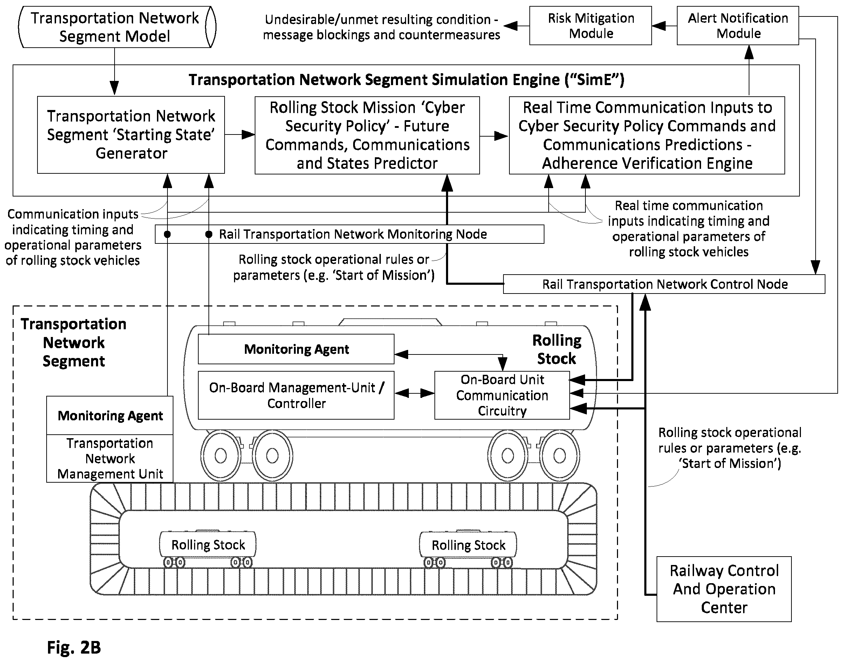

Reference is now made to figure 2B, where there is shown a block diagram of an exemplary system for cybersecurity of a transportation management network, based on operational commands, wherein the system includes a transportation management network monitoring node, a transportation management network control node, an alert notification module, and a risk mitigation module, in accordance with some embodiments.

The transportation management network monitoring node receives and optionally aggregates/buffers the initial and the real time communication inputs indicating timing and operational parameters of rolling stock vehicles. The network monitoring node may handle communications from the entire transportation network or may be associated with one or more specific, or dynamically changing, segments or portions of the network. The communication inputs indicating timing and operational parameters are then relayed by the network monitoring node to the SimE for transportation network segment 'starting state' generation and/or for comparison and adherence verification to the SimE generated cybersecurity policy.

The transportation management network control node receives and optionally aggregates/buffers copies of rolling stock operational rules or parameters messages, such as 'Start or Mission' or 'Mission Update' messages, issued to the rolling stock controller of the on-board management unit. The network control node may handle rolling stock operational rules and parameters from the entire transportation network or may be associated with one or more specific, or dynamically changing, segments or portions of the network. The rolling stock operational rules or parameters messages are then relayed by the network control node to the SimE for rolling stock mission cyber security policy generation, based thereof.

The alert notification module generates and transmits an alert notification if the SimE predicts any undesirable, or cybersecurity policy non-adhering, condition or state of any element, unit and/or rolling stock, of the segment(s) under coverage by the SimE. The alert notification is shown to be sent back to the network control node, that may be a specific control node - out of multiple transportation network control nodes - associated with the SimE's prediction/decision of an undesirable state within the segment under coverage. The alert notification module is further shown to, responsive to the SimE prediction/decision, message the cybersecurity policy breaching rolling stock that may be at risk.

The risk mitigation module, functionally associated with the alert notification module, either blocks messages identified as resulting in undesirable results, or generates emergency countermeasures to a communication breaching the cybersecurity policy and/or predicted to lead to an undesirable state or result.

Reference is now made to 3A where there is shown a flowchart of the main steps executed as part of an exemplary method for validating, based on information that was set up in a ERTMS/ETCS, that no abnormal behavior is occurring as part of the railway infrastructure devices' operation.

Initially, the unit policy generation module/server receives the rail protocol (ETCS) rules/command from the signaling system, following shown steps include: (1) The policy generation module/server creates a database of the estimated future operational commands and communications between the elements/units in the signaling system; (2) The policy generation module/server generates a cybersecurity policy that includes the estimated future metadata communications between elements/units and operation command that can be related to the communications; (3) The policy generation module/server receives the network traffic from the signaling system and analyzes the operational commands; (4) The policy generation module/server receives the network traffic from the signaling system and analyzes the metadata and potential threats; (5) The policy generation module/server checks if any policies have been violated; (6) If a violation is detected, alert of potential malicious activity is triggered, else (7) If no violations were detected, a 'normal operation' indication is made or no action taken; and, (8) upon an operational data update being received by the policy generation module/server, the process is repeated.

According to some embodiments, as part of monitoring real-time communication traffic of the transportation network management units, unit-respective enforcement agents, and/or the SimE, may compare real-time unit communications values (for example, from a received Train Position Report Command) to one or more unit policy values, wherein the policy values may be based on a set of safety rules applied by an initial-traffic, pre-configuration protocol, or an SoM command, received/retrieved by the on-board system/unit of a rollingstock vehicle of the transportation network. The policy values may be further based on a specific context of a status or state of the transportation network.

For example, a communication, such as a Train Position Report Command, including a command to increase the speed of a specific rolling stock vehicle by a certain scale/magnitude, may be regarded as a manipulation/anomaly/cyber-threat if, when correlated to and viewed in the context of the rollingstock vehicle's initial-traffic, pre-configuration protocol, or SoM command, it calls for a safety-rule-breaking or an unclear event. If, for example: (1) the pre-configuration protocol indicates that a train is stationary (i.e. speed=0), along with a monitored command requesting to double the speed - the command may be regarded as unclear; (2) a monitored command requests a 40 Km/h speed increase, when the train's current speed is known to be 80 Km/h, and when its length and model in the pre-configuration protocol are indicative of a maximal safe speed of 100 Km/h - the command may be regarded as unsafe; and/or (3) a reconfiguration protocol is sent to a train, when the train is known to be during movement, may be regarded a cyber threat.

A pre-configuration/SoM rolling stock vehicle's protocol, in accordance with some embodiments, may be intermittently or periodically (e.g. every day/journey) sent to the on-board system/unit of a rolling stock vehicle. The pre-configuration protocol may for example include parameters indicative of the rolling stock vehicle's: maximal speed limit, number of carts/wheels, length of train, type of cargo being carried and/or the like.

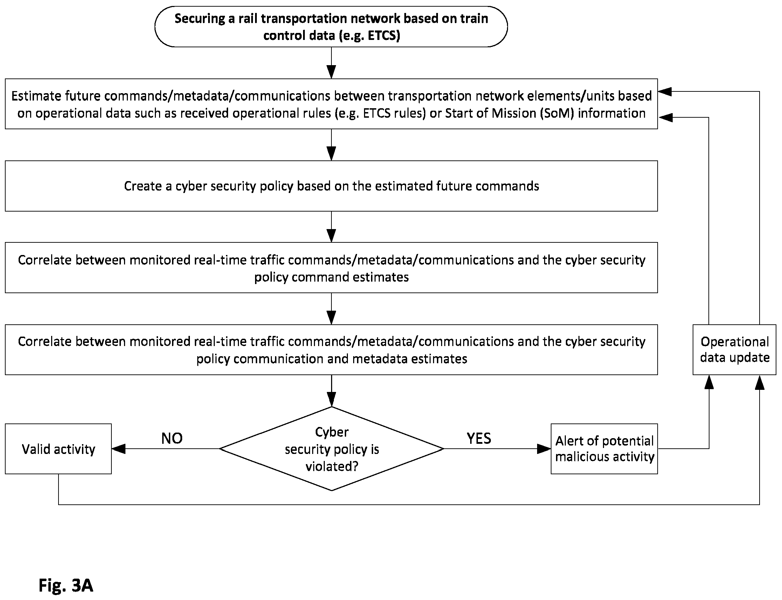

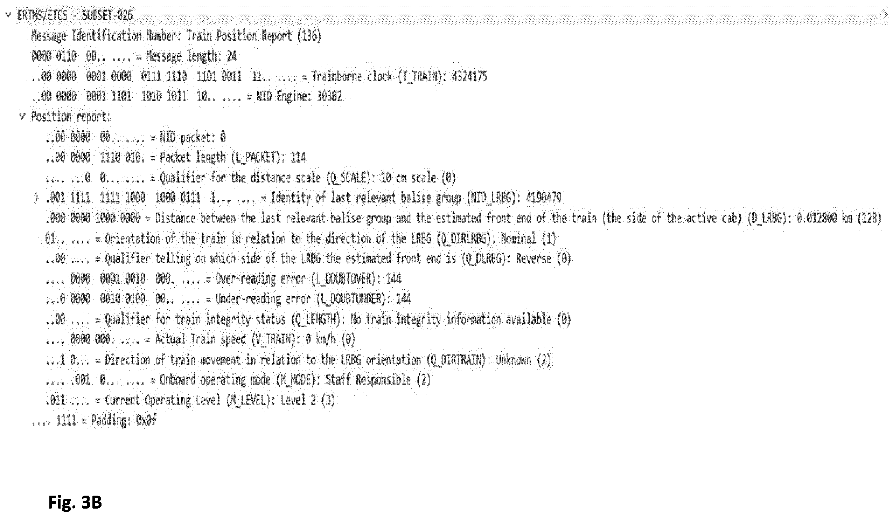

Reference is now made to figure 3B where there is shown an exemplary Train Position Report Command/Message/Communication, compared to a 'Start of Mission' or 'Mission Update' command of the train's/rolling-stock's mission/journey, in accordance with some embodiments. Such a message may be utilized for the generation and agent-enforcement, or SimE enforcement, of one or more communication policy rules for a transportation network's operational unit. The communication policy rules may for example be generated based on configuration message records, such as those shown in the figure, pertaining to the train's rolling-stock's, or train mission's/journey's: relevant balise characteristics, train orientation and travel direction, train integrity data, train's speed, onboard operation mode and level and/or the like.

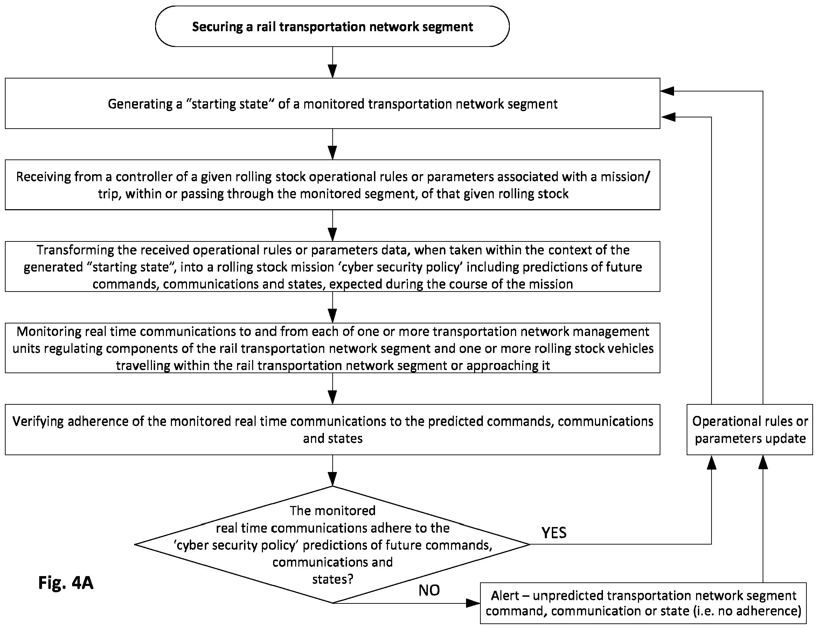

Reference is now made to figure 4A where there is shown a flowchart of an exemplary process for securing a rail transportation network segment, based on a 'starting state' of the segment and an operational commands or parameters cybersecurity policy, in accordance with some embodiments.

In the figure, the following steps are shown: (1) Generating a 'starting state' of a monitored transportation network segment; (2) Receiving from a controller of a given rolling stock operational rules or parameters associated with a mission/trip/journey, within or passing through the monitored segment, of that given rolling stock; (3) Transforming the received operational rules or parameters data, when taken within the context of the generated 'starting state', into a rolling stock mission 'cyber security policy' including predictions of future commands, communications and states, expected during the course of the mission; (4) Monitoring real time communications to and from each of one or more transportation network management units regulating components of the rail transportation network segment and one or more rolling stock vehicles travelling within the rail transportation network segment or approaching it; (5) Verifying adherence of the monitored real time communications to the predicted commands, communications and states; (6) If the monitored real time communications adhere to the 'cyber security policy' predictions of future commands, communications and states, take no action, else (7) alert of an unpredicted transportation network segment command, communication or state (i.e. no adherence); and (8) upon an operational rules or parameters update being received by the policy generation module/server, repeat the process.

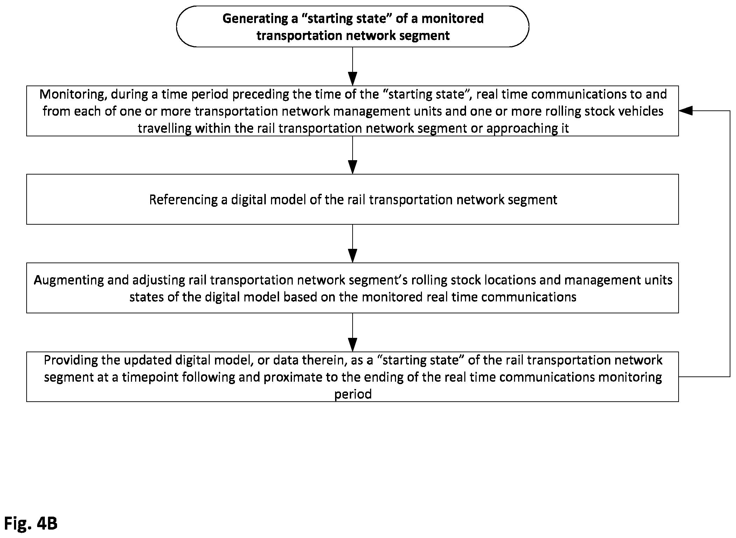

Reference is now made to figure 4B, where there is shown a flowchart of an exemplary process for generating a 'starting state' of a monitored transportation network segment, in accordance with some embodiments.

In the figure, the following steps are shown: (1) Monitoring, during a time period preceding the time of the 'starting state', real time communications to and from each of one or more transportation network management units and one or more rolling stock vehicles travelling within the rail transportation network segment or approaching it; (2) Referencing a digital model of the rail transportation network segment; (3) Augmenting and adjusting rail transportation network segment's rolling stock locations and management units states of the digital model based on the monitored real time communications; (4) Providing the updated digital model, or data therein, as a 'starting state' of the rail transportation network segment at a timepoint following and proximate to the ending of the real time communications monitoring period; (5) Reiterating the process to generate a current/updated 'starting state', for example, upon an operational rules or parameters update being received, new or updated real time communications to and from each of one or more transportation network management units and one or more rolling stock vehicles being received, and/or a rolling stock embarking, or about to embark, on a mission/journey.

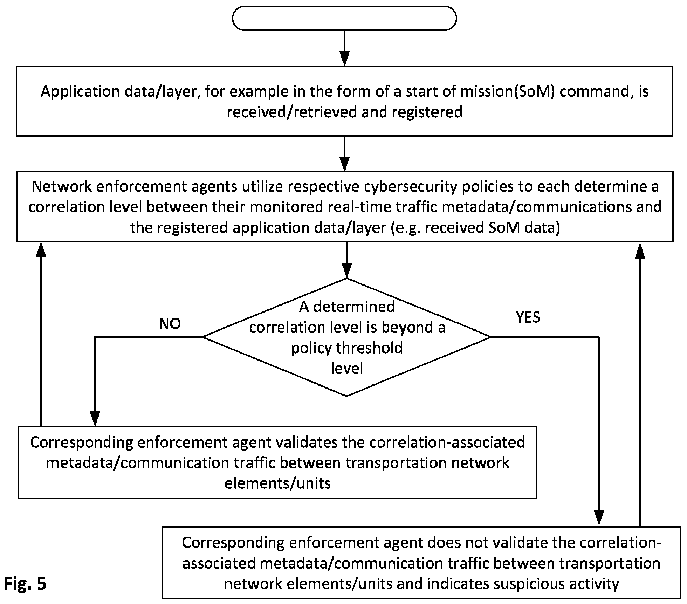

Refence is now made to figure 5 where there is shown a flowchart of an exemplary process for assessing transportation network elements'/units'/rolling-stocks' real-time metadata/communications, based on priorly received application data/layer commands, in accordance with some embodiments.

In the figure, the following exemplary combination of steps is shown: (1) An application data/layer, for example in the form of, or including, a 'start of mission' (SoM) or 'mission update' command, is received/retrieved and registered; (2) Network enforcement agents, or the SimE, utilize management-unit/rolling-stock respective cybersecurity policies to each determine a correlation level between their monitored real-time traffic metadata/communications and the registered application data/layer (e.g. received SoM data); If (3) A specific determined correlation level is not beyond its policy threshold level, then (4) The corresponding enforcement agent or the SimE validates the correlation-associated metadata/communication traffic between transportation network elements/units; and, If (3) A the specific determined correlation level is beyond its policy threshold level, then (5) Corresponding enforcement agent or the SimE does not validate the correlation-associated metadata/communication traffic between transportation network elements/units and indicates suspicious activity.

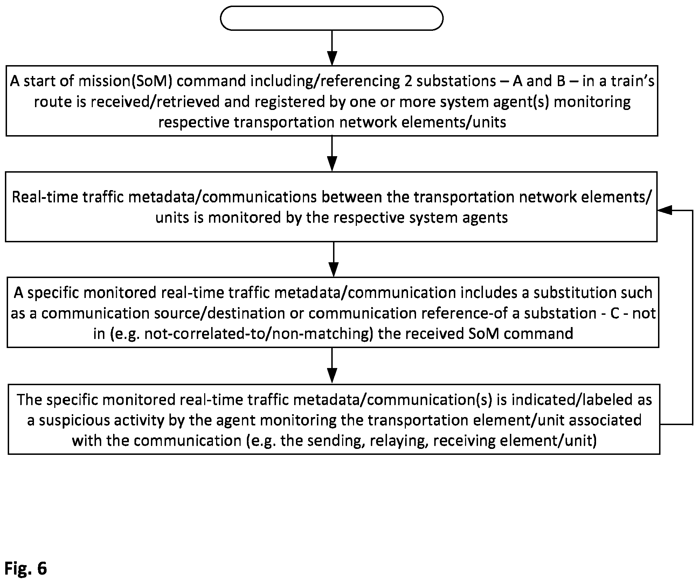

Refence is now made to figure 6 where there is shown a flowchart of a schematic exemplary process for assessing transportation network elements'/units'/rolling-stocks' real-time metadata/communications, based on a specific priorly received application data/layer command, in accordance with some embodiments.

In the figure, the following exemplary combination of steps is shown: (1) A 'start of mission' (SoM) or 'mission update' command including/referencing 2 substations - A and B - in a train's route is received/retrieved and registered by one or more system agent(s) monitoring respective transportation network elements/units, or by the SimE; (2) Real-time traffic metadata/communications between the transportation network elements/units/rolling-stocks is monitored by the respective system agents, or by the SimE; (3) A specific monitored real-time traffic metadata/communication includes a substitution such as a communication source/destination or communication reference-of a substation - C - not in (e.g. not-correlated-to/non-matching) the received SoM command; and (4) The specific monitored real-time traffic metadata/communication(s) is indicated/labeled as a suspicious activity by the agent monitoring the transportation element/unit/rolling-stock associated with the communication (e.g. the sending, relaying, receiving element/unit), or by the SimE.

A system in accordance with some embodiments of the present invention, may apply any combination of the systems, components, techniques, methods and embodiments disclosed in, or associated with, the present application, to: (1) Build a cybersecurity/communication profile/policy based on railway protocol rules; (2) Generate cybersecurity policy from operational commands; (3) Estimate future operation based on one or more initial operation command; (4) Generate estimated future metadata communication predictions based on one or more initial operation command; and/or (5) Detect cybersecurity threats based on policy comparison to actual operational commands, communications, states and/or based on railway protocol behavior.

According to some embodiments, one or more detected railway network operational commands may be used to generate a cyber policy, including predictions of projected operational actions between the communicational components of various infrastructure elements/units and rolling stock vehicles of a rail transportation network. The cyber policy may be at least partially based on a status or state of the transportation railway network, including starting/current statuses or states of one or more network units or rollingstock.

A cyber policy in accordance with embodiments, may include one or more transportation network units/rolling-stock-vehicles future behaviors, predicted based on received operational commands. Monitoring/Enforcement agents, each functionally associated with and monitoring communication with an element/unit or a rolling stock vehicle of the transportation network, may verify the adherence of their respective element/unit/rolling-stock communications with element/unit/rolling-stock's cyber policy predictions.

An operational command may include rolling stock journey parameters, such as a given train's route, speed, distance to be passed, and number of carts - as part of a specific journey. The train's route and speed, for example, may be used to conclude, and add respective cyber policy records/predictions, in regard to the stations/balises to be passed and communicatively 'handshaked' by the train along its journey and the estimated time of each such 'handshake'; The train's route, along with railway network switches statuses, may for example be used to conclude, and add respective cyber policy records/predictions, that a train communication requesting/verifying a given rail track switch's position, to correctly divert it towards its destination, is expected to be sent a certain amount of time prior to the train reaching the switch; and/or The train's length, may for example be used to conclude whether it can simultaneously park in a given station along with another train, adding a cyber policy prediction/record for a train to station communication, prior to the train's entry into the station, verifying that no other train, or other train beyond a certain length, is currently parked at that station.

According to some embodiments, a monitored real-time communication of a first given rolling stock or network unit with a second given rolling stock vehicles or network units - determined to comply with cyber policy predictions of the first given rolling stock or network unit - may be added to a cyber policy of the second given rolling stock vehicles or network unit. For example, a rolling stock communicating with an infrastructure unit, wherein the communication adheres with the rolling stock's cyber policy, may be added as a new record/prediction to a cyber policy of the communicated infrastructure unit.

An exemplary cyber policy enforcement process, in accordance with embodiments, may include: (1) a train passing through a set of positions/points/locations/stations A and B; (2) a handshake communication between the train and position A infrastructure; (3) the train issues an operational action update (e.g. a 'Train Position Report') - 'my_train_position = A'; (4) The train's cyber policy is checked - 'is this specific train allowed to currently be at position A?'.

According to some embodiments of the present invention, a system for securing a rail transportation network segment, may include: (1) monitoring agents functionally associated with and monitoring communications to and from each of one or more transportation network management units regulating components of the rail transportation network; and (2) a transportation network segment simulation engine ('SimE') for: (a) receiving from a controller of a given rolling stock operational rules or parameters associated with a mission of that given rolling stock; (b) digitally simulating operation of one or more segments of the rail transportation network to generate a cyber security policy, including one or more predictions of future operational commands or communications associated with the mission of the given rolling stock, wherein the predictions are at least partially based on a 'starting state' of the transportation network segment and the received operational rules or parameters; (c) receiving from the monitoring agents real time communication inputs indicating timing and operational parameters of rolling stock vehicles on, or approaching, the transportation network segment; and (d) verifying adherence of the real time communication inputs to one or more of the predicted future operational commands or communications within the generated cyber security policy of the given rolling stock's mission.

According to some embodiments of the present invention, the transportation network segment simulation engine ('SimE') may be further adapted for: (a) receiving operational rules or parameters from a controller of a railway network signaling system element, associated with a mission of that given system element; (b) digitally simulating operation of one or more segments of the rail transportation network to generate a cyber security policy, including one or more predictions of future operational commands or communications associated with the mission of the given system element, wherein the predictions are at least partially based on a 'starting state' of the transportation network segment and the received operational rules or parameters; (c) receiving from the monitoring agents real time communication inputs indicating timing and operational parameters of system elements positioned on, or approaching, the transportation network segment; and (d) verifying adherence of the real time communication inputs to one or more of the predicted future operational commands or communications within the generated cyber security policy of the given system element's mission.

Signaling system elements, in accordance with embodiments, may include any combination of rolling stocks, wayside units, railway infrastructure element controls, command and control components such as security operation center (SOC) components, and/or any other transportation network signaling system elements.

According to some embodiments, the 'starting state' of the transportation network segment may be derived based on a digital model of the given transportation network segment and an initial set of communication inputs indicating timing and operational parameters of rolling stock vehicles on, or approaching, the transportation network segment.

According to some embodiments, the predicted future operational commands or communications may include the real-time configuration, location and or state of rolling stock vehicles on, or approaching, the transportation network segment.

According to some embodiments, the given rolling stock operational rules or parameters may be provided as part of a 'Start of Mission' message to the given rolling stock's controller.

According to some embodiments, the given rolling stock operational rules or parameters may be provided as part of an update after start of mission of the given rolling stock.

According to some embodiments, predicting future operational commands or communications associated with the mission of the given rolling stock may include digitally modeling and simulating operation of one or more segments of the transportation system.

According to some embodiments, predicting future operational commands or communications associated with the mission of the given rolling stock may include predicting future locations and states, at various points in the future, of all rolling stock passing through the transportation network segment, based on instantaneous transportation system operational parameters and states of all relevant elements within the transportation network segment being covered.

According to some embodiments, the SimE may recalculate predictions of future operational commands or communications associated with the mission of the given rolling stock each time said SimE receives a new 'Start of Mission' or a 'Mission Update' message copy.

According to some embodiments, as part of updating the cyber security policy the SimE may run one or multiple accelerated simulations of varying speeds, resolutions, or durations, in order to re-predict future operational commands or communications associated with the mission of the given rolling stock, each time new real time communication inputs regarding any rolling stock element within or approaching the segment under coverage is received.

According to some embodiments, the SimE may trigger an alert of an undesirable predicted network segment state upon one or more of the real time communication inputs not adhering to a predicted future operational command or communication within one of the ran simulations.

According to some embodiments, an undesirable predicted network segment state may be selected from the group consisting of: a given rolling stock is not communicating with a specific network management unit at a predicted time; a given rolling stock is communicating with a specific network management unit at an unpredicted time; a first given rolling stock and a second given rolling stock are to be at the same location at the same time, at some given point in the future; a given rolling stock receives instructions which cause it to take a turn overloaded or at an excessive speed; a given rolling stock is approaching a station faster than would allow for a stop at the station; and a given rolling stock takes route unsuitable for the type of payload designated by the 'Start of Mission' or 'Mission Update'.

According to some embodiments of the present invention, a system for securing a rail transportation network segment, may include: (1) monitoring agents functionally associated with and monitoring communications to and from each of one or more signaling system elements of the rail transportation network; and (2) a transportation network segment simulation engine ('SimE') for: (a) receiving from a controller of a given railway network signaling system element, operational rules or parameters associated with a mission of that given system element; (b) digitally simulating operation of one or more segments of the rail transportation network to generate a cyber security policy, including one or more predictions of future operational commands or communications associated with the mission of the given system element, wherein the predictions are at least partially based on a 'starting state' of the transportation network segment and the received operational rules or parameters; (c) receiving from the monitoring agents real time communication inputs indicating timing and operational parameters of system elements positioned on, or approaching, the transportation network segment; and (d) verifying adherence of the real time communication inputs to one or more of the predicted future operational commands or communications within the generated cyber security policy of the given system element's mission.

According to some embodiments, communicating signaling system element types monitored by the monitoring agents may include any combination of: rolling stocks, wayside units, RBCs, interlockings, point machines, light signals, railway infrastructure element controls, command and control components, security operation center (SOC) components, and/or other signaling system elements.

According to some embodiments, the operational commands or communications associated with the mission of the given system element may be operational commands or communications of a railway protocol standard. According to some embodiments, the railway protocol standard may be the ERTMS, ETCS, PTC, CBTC, and/or any other railway protocol standard.

According to some embodiments of the present invention, a method for securing a rail transportation network segment may comprise: (1) monitoring communications to and from each of one or more transportation network management units regulating components of the rail transportation network; (2) receiving from a controller of a given rolling stock operational rules or parameters associated with a mission of that given rolling stock; (3) digitally simulating operation of one or more segments of the rail transportation network to generate a cyber security policy, including one or more predictions of future operational commands or communications associated with the mission of the given rolling stock, wherein the predictions are at least partially based on a 'starting state' of the transportation network segment and the received operational rules or parameters; (4) receiving real time communication inputs indicating timing and operational parameters of rolling stock vehicles on, or approaching, the transportation network segment; and (5) Verifying adherence of the real time communication inputs to one or more of the predicted future operational commands or communications within the generated cyber security policy of the given rolling stock's mission.

According to some embodiments of the present invention, a method for securing a rail transportation network segment may comprise: (a) receiving operational rules or parameters from a controller of a railway network signaling system element, associated with a mission of that given system element; (b) digitally simulating operation of one or more segments of the rail transportation network to generate a cyber security policy, including one or more predictions of future operational commands or communications associated with the mission of the given system element, wherein the predictions are at least partially based on a 'starting state' of the transportation network segment and the received operational rules or parameters; (c) receiving from the monitoring agents real time communication inputs indicating timing and operational parameters of system elements positioned on, or approaching, the transportation network segment; and (d) verifying adherence of the real time communication inputs to one or more of the predicted future operational commands or communications within the generated cyber security policy of the given system element's mission.

Signaling system elements, in accordance with embodiments, may include any combination of rolling stocks, wayside units, railway infrastructure element controls, command and control components such as security operation center (SOC) components, and/or any other transportation network signaling system elements.

According to some embodiments, the method may further comprise deriving the 'starting state' of the transportation network segment based on a digital model of the given transportation network segment and an initial set of communication inputs indicating timing and operational parameters of rolling stock vehicles on, or approaching, the transportation network segment.

According to some embodiments, the predicted future operational commands or communications include the real-time configuration, location and or state of rolling stock vehicles on, or approaching, the transportation network segment.

According to some embodiments, the method may further comprise receiving the given rolling stock operational rules or parameters as part of a 'start of mission' message sent to the given rolling stock's controller.

According to some embodiments, the method may further comprise receiving the given rolling stock operational rules or parameters as part of an update after start of mission of the given rolling stock.

According to some embodiments, predicting future operational commands or communications associated with the mission of the given rolling stock, may further comprise digitally modeling and simulating operation of one or more segments of the transportation system.

According to some embodiments, predicting future operational commands or communications associated with the mission of the given rolling stock, may further comprise predicting future locations and states, at various points in the future, of all rolling stock passing through the transportation network segment, based on instantaneous transportation system operational parameters and states of all relevant elements within the transportation network segment being covered.

According to some embodiments, the method may further comprise recalculating predictions of future operational commands or communications associated with the mission of the given rolling stock each time a new 'Start of Mission' or a 'Mission Update' message copy is issued or received.

According to some embodiments, the method may further comprise updating the cyber security policy by running one or multiple accelerated simulations of varying speeds, resolutions, or durations, in order to re-predict future operational commands or communications associated with the mission of the given rolling stock, each time new real time communication inputs regarding any rolling stock element within or approaching the segment under coverage is received.

Functions, operations, components and/or features described herein with reference to one or more embodiments, may be combined or otherwise utilized with one or more other functions, operations, components and/or features described herein with reference to one or more other embodiments, or vice versa.

While certain features of the invention have been illustrated and described herein, many modifications, substitutions, changes, and equivalents will now occur to those skilled in the art. It is, therefore, to be understood that the appended claims are intended to cover all such modifications and changes as fall within the true spirit of the invention.

## Claims

1. A system for securing a rail transportation network segment, said system including:
monitoring agents functionally associated with and monitoring communications to and from each of one or more transportation network management units regulating components of the rail transportation network; and
a transportation network segment simulation engine ('SimE') for:
receiving from a controller of a given rolling stock operational rules or parameters associated with a mission of that given rolling stock;
digitally simulating operation of one or more segments of the rail transportation network to generate a cyber security policy, including one or more predictions of future operational commands or communications associated with the mission of the given rolling stock, wherein the predictions are at least partially based on a 'starting state' of the transportation network segment and the received operational rules or parameters;
receiving from said monitoring agents real time communication inputs indicating timing and operational parameters of rolling stock vehicles on, or approaching, the transportation network segment; and
Verifying adherence of the real time communication inputs to one or more of the predicted future operational commands or communications within the generated cyber security policy of the given rolling stock's mission.

2. The system according to claim 1, wherein the 'starting state' of the transportation network segment is derived based on a digital model of the given transportation network segment and an initial set of communication inputs indicating timing and operational parameters of rolling stock vehicles on, or approaching, the transportation network segment.

3. The system according to any one of the preceding claims, wherein the predicted future operational commands or communications include the real-time configuration, location and or state of rolling stock vehicles on, or approaching, the transportation network segment.

4. The system according to any one of the preceding claims, wherein the given rolling stock operational rules or parameters are provided as part of a 'Start of Mission' message to the given rolling stock's controller.

5. The system according to any one of the preceding claims, wherein the given rolling stock operational rules or parameters are provided as part of an update after start of mission of the given rolling stock.

6. The system according to any one of the preceding claims, wherein predicting future operational commands or communications associated with the mission of the given rolling stock includes digitally modeling and simulating operation of one or more segments of the transportation system.

7. The system according to any one of the preceding claims , wherein predicting future operational commands or communications associated with the mission of the given rolling stock includes predicting future locations and states, at various points in the future, of all rolling stock passing through the transportation network segment, based on instantaneous transportation system operational parameters and states of all relevant elements within the transportation network segment being covered.

8. The system according to any one of the preceding claims, wherein said SimE recalculates predictions of future operational commands or communications associated with the mission of the given rolling stock each time said SimE receives a new 'Start of Mission' or a 'Mission Update' message copy.

9. The system according to any one of the preceding claims , wherein as part of updating the cyber security policy said SimE runs one or multiple accelerated simulations of varying speeds, resolutions, or durations, in order to re-predict future operational commands or communications associated with the mission of the given rolling stock, each time new real time communication inputs regarding any rolling stock element within or approaching the segment under coverage is received.

10. The system according to claim 9, wherein said SimE triggers an alert of an undesirable predicted network segment state upon one or more of the real time communication inputs not adhering to a predicted future operational command or communication within one of the ran simulations.

11. The system according to any one of claims 9 or10 10, wherein an undesirable predicted network segment state is selected from the group consisting of: a given rolling stock is not communicating with a specific network management unit at a predicted time; a given rolling stock is communicating with a specific network management unit at an unpredicted time; a first given rolling stock and a second given rolling stock are to be at the same location at the same time, at some given point in the future; a given rolling stock receives instructions which cause it to take a turn overloaded or at an excessive speed; a given rolling stock is approaching a station faster than would allow for a stop at the station; and a given rolling stock takes route unsuitable for the type of payload designated by the 'Start of Mission' or 'Mission Update'.

12. A system for securing a rail transportation network segment, said system including:
monitoring agents functionally associated with and monitoring communications to and from each of one or more signaling system elements of the rail transportation network; and
a transportation network segment simulation engine ('SimE') for:
receiving from a controller of a given railway network signaling system element, operational rules or parameters associated with a mission of that given system element; digitally simulating operation of one or more segments of the rail transportation network to generate a cyber security policy, including one or more predictions of future operational commands or communications associated with the mission of the given system element, wherein the predictions are at least partially based on a 'starting state' of the transportation network segment and the received operational rules or parameters; receiving from said monitoring agents real time communication inputs indicating timing and operational parameters of system elements positioned on, or approaching, the transportation network segment; and
verifying adherence of the real time communication inputs to one or more of the predicted future operational commands or communications within the generated cyber security policy of the given system element's mission.

13. The system according to claim 12, wherein communicating signaling system element types monitored by said monitoring agents are selected from the group consisting of: rolling stocks, wayside units, RBCs, interlockings, point machines, light signals, railway infrastructure element controls, command and control components, and security operation center (SOC) components.

14. A method for securing a rail transportation network segment, said method comprising:
monitoring communications to and from each of one or more transportation network management units regulating components of the rail transportation network;
receiving from a controller of a given rolling stock operational rules or parameters associated with a mission of that given rolling stock;
digitally simulating operation of one or more segments of the rail transportation network to generate a cyber security policy, including one or more predictions of future operational commands or communications associated with the mission of the given rolling stock, wherein
the predictions are at least partially based on a 'starting state' of the transportation network segment and the received operational rules or parameters;
receiving real time communication inputs indicating timing and operational parameters of rolling stock vehicles on, or approaching, the transportation network segment; and
Verifying adherence of the real time communication inputs to one or more of the predicted future operational commands or communications within the generated cyber security policy of the given rolling stock's mission.

15. The method according to claim 14, further comprising deriving the 'starting state' of the transportation network segment based on a digital model of the given transportation network segment and an initial set of communication inputs indicating timing and operational parameters of rolling stock vehicles on, or approaching, the transportation network segment.
